# EUROPEAN PATENT SPECIFICATION

(11) **EP 1 818 163 B1**
(45) Date of publication and mention of the grant of the patent: **25.05.2011**
(21) Application number: 07102204.0
(22) Date of filing: 13.02.2007
(51) Int. Cl.: B29D 30/06

(54) **Method and system for producing a precured tread strip**
Verfahren und System zum Herstellen eines vorgehärteten Laufflächenstreifens
Procédé et système pour la fabrication d'une bande de roulement prévulcanisée.

(30) Priority: 14.02.2006 IT TO20060102
(43) Date of publication of application: 15.08.2007
(73) Proprietor: Bridgestone Corporation, Tokyo 104-8340 (JP)
(72) Inventor: Lelio, Luca, 00135 Roma (IT)
(74) Representative: Jorio, Paolo

(56) References cited:
- GB-A- 1 503 027
- US-A- 3 136 673
- US-A- 5 277 727
- US-B1- 6 368 439

## Description

The present invention relates to a method and system for producing a precured tread strip.

The present invention may be used to advantage in cold retreading of truck tyres, to which the following description refers purely by way of example.

Cold retreading of a truck tyre normally comprises removing the worn tread from the tyre carcass; and applying a new tread to the tyre carcass by winding an intermediate strip of green rubber and a molded, precured tread strip about the carcass, and then put the carcass inside an autoclave for further curing to ensure optimum adhesion of the tread to the carcass by virtue of the bonding action of the intermediate strip.

One example of a precured tread strip ready for application to a tyre carcass is described in Patent US5277727A1; and one example of a tyre retreading station using the above method is described in Patent US6368439B1.

Patent specification GB 1503027 - A discloses the preparation of a sheet of bonding material to be bonded to a premoulded tread so that the single assembly constituted by the tread and the sheet of bonding material can be made and subsequently stored at usual ambient temperatures without there being serious loss of bonding properties of the bonding material or a serious risk of premature vulcanization of the bonding material occurring.

Patent specification US 3136673 - A discloses a method of retreading tires by interposing between the crown and a preformed tread strip, two uniformly thick strips of material, each containing one of two components which react on contact with each other to form a bond.

The precured tread strips are produced by producing a green-rubber mixture; extruding the green-rubber mixture to form a continuous strip of green tread; cutting the continuous strip of green tread transversely into green tread strips of given length; and then curing each green tread strip.

At this point, the bottom surface of each precured tread strip is "buffed", i.e. brushed and/or abraded to remove any rubber-metal nonstick surface agents remaining after the curing process, to increase the specific surface area, and so improve adhesion to the carcass; and, finally, the precured tread strip is rolled up for transfer to the retread station.

Oxygen in the air has been found to produce surface oxidation, and so impair grip, of the bottom surface of the precured tread strip. To protect the bottom surface of the precured tread strip from oxidation, it is therefore common practice to spray the bottom surface with a coating of liquid (so-called "cement") containing green rubber and normalheptane (or other organic solvent), and which, in addition to protecting the bottom surface of the precured tread strip against oxidation, also assists adhesion of the precured tread strip to the intermediate strip of green rubber between the precured tread strip and the carcass for retreading. It should be pointed out that, the "cement" being adhesive, a sheet of plastic material must be placed on the bottom surface of the "cemented" precured tread strip before it is rolled up.

Sample tests of retreaded tyres, however, show adhesion of the new tread to the retreaded tyre carcass to be frequently poor, thus at least partly impairing performance, though without actually impairing the safety of the retreaded tyre.

It is an object of the present invention to provide a method and system for producing a precured tread strip, designed to eliminate the aforementioned drawbacks and which, in particular, are cheap and easy to implement.

According to the present invention, there are provided a method and system for producing a precured tread strip, as recited in the accompanying Claims.

A number of non-limiting embodiments of the present invention will be described by way of example with reference to the accompanying drawings, in which:
Figure 1 shows, schematically, a system for producing a precured tread strip in accordance with the present invention;
Figure 2 shows, schematically, a sequence of packing operations performed at a packing station of the Figure 1 system;
Figure 3 shows, schematically, an alternative sequence of packing operations performed at the packing station of the Figure 1 system;
Figure 4 shows, schematically, a further sequence of packing operations performed at the packing station of the Figure 1 system.

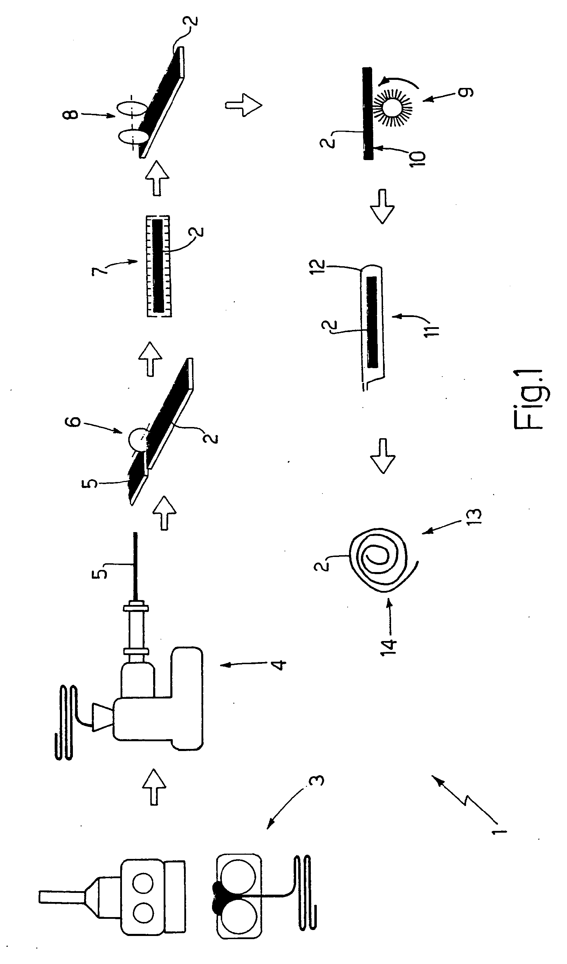

Number 1 in Figure 1 indicates as a whole a system for producing precured tread strips 2 for cold retreading truck tyres.

System 1 comprises a mixing device 3 for producing a green-rubber mixture, which is fed to an extruding device 4 where the green-rubber mixture is extruded into a continuous strip 5 of green tread. Downstream from extruding device 4, a cutting device 6 cuts the continuous strip 5 of green tread into a succession of green tread strips 2 of given length; downstream from cutting device 6, a curing device 7 cures green tread strips 2; and, downstream from curing device 7, a trimming device 8 preferably removes the curing flashes from each precured tread strip 2.

Downstream from trimming device 8, a buffing device 9 buffs the bottom surface 10 of each precured tread strip 2. More specifically, buffing comprises brushing and/or abrading the bottom surface 10 of each precured tread strip 2 to remove any rubber-metal nonstick surface agents remaining after the curing process, to increase the specific surface area and so improve adhesion to the intermediate strip of green rubber applied about a respective carcass of a tyre for retreading.

As soon as bottom surface 10 of precured tread strip 2 is buffed, each precured tread strip 2 is vacuum packed inside a bag 12, made of shockproof, heat-seal plastic material impermeable to air (e.g. polyethylene), at a packing station 11 downstream from buffing device 9. More specifically, packing station 11 comprises an inserting device for inserting each precured tread strip 2 inside bag 12; a suction device for producing a vacuum inside bag 12 containing precured tread strip 2; and a sealing device for sealing bag 12 containing precured tread strip 2.

System 1 preferably also comprises a rolling device 13 for rolling each precured tread strip 2 up into a roll 14 for fast, easy storage and transport of precured tread strip 2. Each roll 14 is preferably stabilized by applying a non-adhesive belt 15 about roll 14.

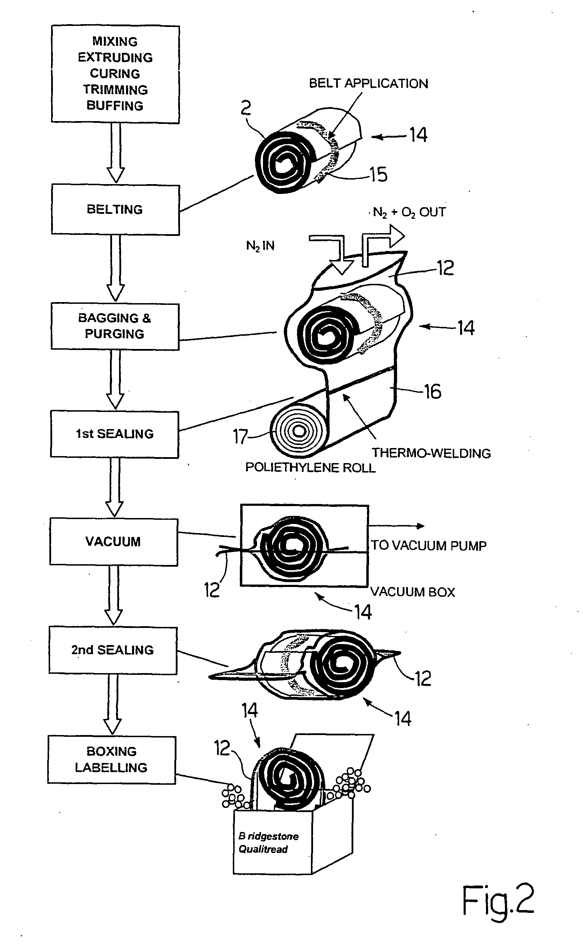

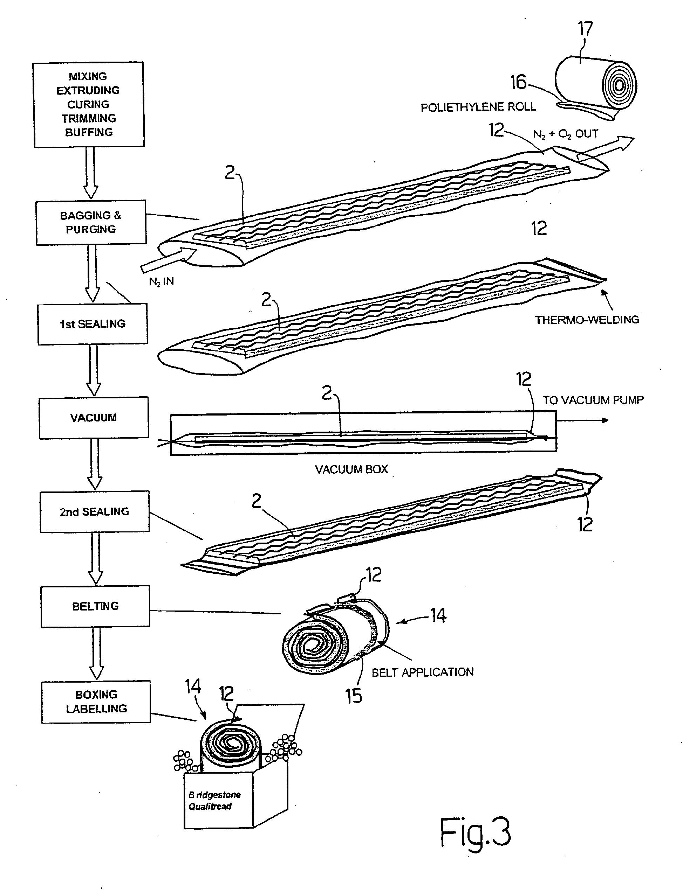

In Figure 2, rolling device 13 is located upstream from packing station 11, so that roll 14 is inserted inside bag 12. In Figure 3, rolling device 13 is located downstream from packing station 11, so that a flat precured tread strip 2 is inserted inside bag 12, and the precured tread strip 2 and bag 12 containing precured tread strip 2 are subsequently rolled up together into roll 14.

Inserting roll 14 inside bag 12 to some extent complicates system 1, but on the other hand simplifies actual use of precured tread strip 2 on retread systems, which are currently designed to employ a precured tread strip 2 in the form of a roll 14 as opposed to a flat precured tread strip 2. Conversely, inserting a flat precured tread strip 2 inside bag 12 simplifies system 1, but, on existing retread systems, precured tread strip 2 in the form of roll 14 must be unrolled to remove bag 12 and then rolled back up into roll 14.

To eliminate any trace of oxygen inside bag 12, a feed device may be provided upstream from the suction device to feed an inert gas (typically nitrogen) inside bag 12 just before the vacuum is formed. It should be stressed that using inert gas to eliminate any trace of oxygen inside bag 12 is purely optional, in that vacuum sealing of bag 12 in itself ensures a very low residual oxygen level inside bag 12.

As shown in Figures 2 and 3, insertion of each precured tread strip 2 inside bag 12 comprises unwinding a strip 16 of tubular packing material off a reel 17; inserting precured tread strip 2 inside strip 16 of packing material; sealing bag 12 along strip 16 of tubular packing material by means of two transverse seals on opposite sides of precured tread strip 2; and detaching bag 12 from the continuous strip 16. Bag 12 is normally detached from strip 16 of packing material simultaneously with one of the two transverse sealing operations.

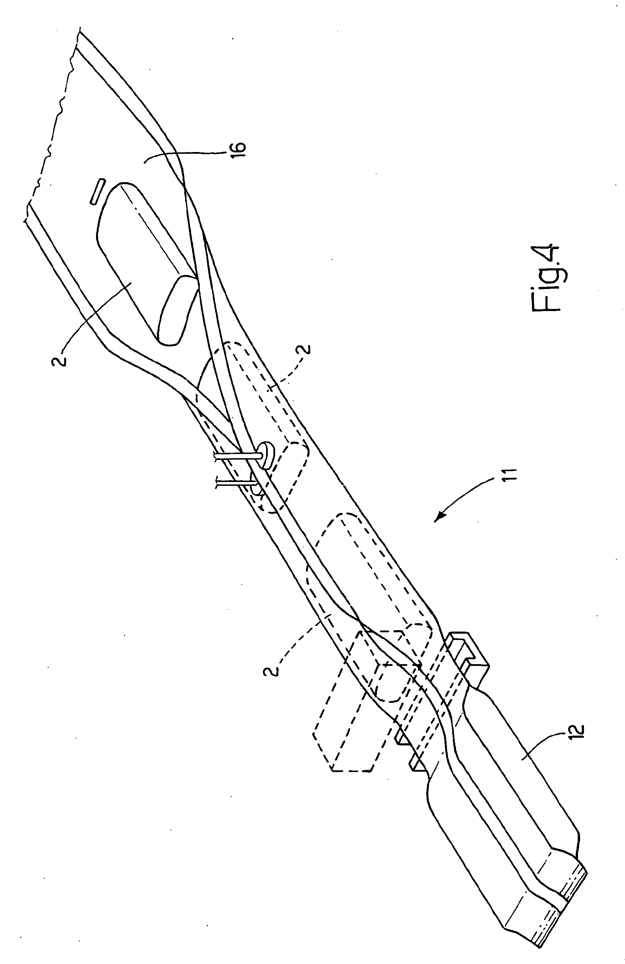

As shown in Figure 4, inserting each precured tread strip 2 inside bag 12 comprises unwinding a strip 16 of flat packing material off a reel 17 (not shown); placing precured tread strip 2 on strip 16 of flat packing material; folding strip 16 of packing material into a tube about precured tread strip 2; stabilizing the tubular shape of strip 16 of packing material by means of a longitudinal seal; sealing bag 12 along strip 16 of packing material, folded into a tube about precured tread strip 2, by means of two transverse seals on opposite sides of precured tread strip 2; and detaching bag 12 from the continuous strip 16. Bag 12 is normally detached from strip 16 of packing material simultaneously with one of the two transverse sealing operations.

In one embodiment, system 1 may comprise a boxing device located downstream from packing station 11 to insert each roll 14 (or a group of rolls 14) inside a cardboard box.

Each molded, precured tread strip 2 leaving system 1 has no cement, and is enclosed in a vacuum-sealed bag 12 of material impermeable to air. It is important to note that system 1 as described above in no way involves "cementing" bottom surface 10 of precured tread strip 2, which is substantially protected against oxidation by the extremely low oxygen level inside vacuum-sealed bag 12.

The above method of inserting each precured tread strip 2 inside a respective bag 12 sealed immediately after bottom surface 10 is buffed, and with no "cementing" (i.e. application of an organic solvent with added rubber), has numerous advantages.

Tests of tyres retreaded with precured tread strips 2 packed inside sealed bags show a high degree of adhesion between the new tread and the underlying carcass.

Moreover, organic solvents being highly pollutant, eliminating application of organic-solvent-based "cement" provides for greatly reducing overall pollution of the precured tread strip 2 manufacturing process. In this connection, it is important to note that recent European Union standards (VOC 13/1999/ECV) call for a 75% reduction in the use of organic solvents in industrial processes by the year 2007.

## Claims

1. A method of producing a precured tread strip (2); the method comprising the steps of:
forming a green rubber mixture;
extruding the rubber mixture into a continuous green tread strip (5);
detaching a green tread strip (2) from the continuous green tread strip (5);
curing the green tread strip (2) to obtain the precured tread strip (2); and
buffing a bottom surface (10) of the precured tread strip (2);
the method is **characterized by** comprising the further steps of:
inserting the precured tread strip (2) inside a bag (12), made of material impermeable to air, immediately after buffing the bottom surface (10) of the precured tread strip (2);
forming a vacuum inside the bag (12) containing the precured tread strip (2); and
sealing the bag (12) containing the precured tread strip (2).

2. A method as claimed in Claim 1, wherein the precured tread strip (2) is rolled up into a roll (14).

3. A method as claimed in Claim 2, wherein the roll (14) is stabilized by applying a belt (15) about the roll (14).

4. A method as claimed in Claim 2 or 3, wherein the precured tread strip (2) is rolled up into a roll (14) after the precured tread strip (2) is inserted inside the bag (12).

5. A method as claimed in Claim 2 or 3, wherein the precured tread strip (2) is rolled up into a roll (14) before the precured tread strip (2) is inserted inside the bag (12).

6. A method as claimed in one of Claims 1 to 5, wherein inert gas is fed into the bag (12) before the vacuum is formed.

7. A method as claimed in Claim 6, wherein the inert gas is nitrogen.

8. A method as claimed in one of Claims 1 to 7, wherein the bag (12) is made of heat-seal polyethylene.

9. A method as claimed in one of Claims 1 to 8, wherein the step of inserting the precured tread strip (2) inside the bag (12) comprises:
unwinding a strip (16) of tubular packing material, impermeable to air, off a reel (17);
inserting the precured tread strip (2) inside the strip (16) of tubular packing material;
sealing the bag (12) along the strip (16) of tubular packing material by means of two transverse seals on opposite sides of the precured tread strip (2); and
detaching the bag (12) from the strip (16) of packing material.

10. A method as claimed in one of Claims 1 to 8, wherein the step of inserting the precured tread strip (2) inside the bag (12) comprises:
unwinding a strip (16) of flat packing material, impermeable to air, off a reel (17);
placing the precured tread strip (2) on the strip (16) of packing material;
folding the strip (16) of packing material into a tube about the precured tread strip (2);
stabilizing the tubular shape of the strip (16) of packing material by means of a longitudinal seal;
sealing the bag (12) along the strip (16) of packing material, folded into a tube about the precured tread strip (2), by means of two transverse seals on opposite sides of the precured tread strip (2); and
detaching the bag (12) from the strip (16) of packing material.

11. A method as claimed in one of Claims 1 to 10, wherein the precured tread strip (2) is cured immediately after the precured tread strip (2) is detached from the continuous tread strip (5).

12. A system (1) for producing a precured tread strip (2); the system (1) comprising:
a mixing device (3) for producing a green rubber mixture;
an extruding device (4) for extruding the rubber mixture into a green continuous tread strip (5);
a cutting device (6) for cutting a green tread strip (2) from the continuous green tread strip (5);
a curing device (7) for curing the green tread strip (2) to obtain the precured tread strip (2); and
a buffing device (9) for buffing a bottom surface (10) of the precured tread strip (2);
the system (1) is **characterized by** comprising a packing station (11) located downstream from the buffing device (9) and in turn comprising:
an inserting device for inserting the precured tread strip (2) inside a bag (12), made of material impermeable to air, immediately after the bottom surface (10) of the precured tread strip (2) is buffed;
a suction device for forming a vacuum inside the bag (12) containing the precured tread strip (2); and
a sealing device for sealing the bag (12) containing the precured tread strip (2).

13. A system (1) as claimed in Claim 12, wherein a rolling device (13) rolls the precured tread strip (2) up into a roll (14).

14. A system (1) as claimed in Claim 13, wherein the rolling device (13) is located upstream from the packing station (11).

15. A system (1) as claimed in Claim 13, wherein the rolling device (13) is located downstream from the packing station (11).

16. A system (1) as claimed in one of Claims 12 to 15, wherein, upstream from the suction device, a feed device feeds an inert gas into the bag (12).

17. A system (1) as claimed in one of Claims 12 to 16, wherein, upstream from the cutting device (6), a curing device (7) cures the continuous tread strip (5).

18. A molded, precured tread strip (2) for cold retreading a truck tyre; the precured tread strip (2) is **characterized by** having no cement, and by being enclosed in a vacuum-sealed bag (12) of material impermeable to air.

## Patentansprüche

1. Ein Verfahren zum Herstellen eines vorgehärteten Laufflächenstreifens (2), wobei das Verfahren die folgenden Schritte umfasst:
Bilden einer Gummigrünmischung,
Extrudieren der Gummimischung in einen kontinuierlichen Grünlaufflächenstreifen (5),
Ablösen des Grünlaufflächenstreifens (2) von den kontinuierlichen Grünlaufflächenstreifen (5),
Härten des Grünlaufflächenstreifens (2), um den vorgehärteten Laufflächenstreifen (2) zu erhalten, und
Puffern einer unteren Oberfläche (10) des vorgehärteten Laufflächenstreifens (2),
wobei das Verfahren **dadurch gekennzeichnet ist, dass** es die weiteren Schritte umfasst:
Einfügen des vorgehärteten Laufflächenstreifens (2) in eine Tasche (12) aus einem luftundurchlässigen Material sofort nach dem Puffern der unteren Oberfläche (10) des vorgehärteten Laufflächenstreifens (2),
Bilden eines Vakuums innerhalb der Tasche (12), die den vorgehärteten Laufflächenstreifen (2) enthält, und
Versiegeln der Tasche (12), die den vorgehärteten Laufflächenstreifen (2) enthält.

2. Verfahren nach Anspruch 1, in welchem der vorgehärtete Laufflächenstreifen (2) in eine Rolle (14) aufgerollt ist.

3. Verfahren nach Anspruch 2, in welchem die Rolle (14) durch Aufbringen eines Gürtels (15) um die Rolle (14) stabilisiert ist.

4. Verfahren nach Anspruch 2 oder 3, in welchem der vorgehärtete Laufflächenstreifen (2) in eine Rolle (14) aufgerollt ist, nachdem der vorgehärtete Laufflächenstreifen (2) in die Tasche (12) eingefügt ist.

5. Verfahren nach Anspruch 2 oder 3, in welchem der vorgehärtete Laufflächenstreifen (2) in eine Rolle (14) aufgerollt ist, bevor der vorgehärtete Laufflächenstreifen (2) in die Tasche (12) eingefügt ist.

6. Verfahren nach irgendeinem der Ansprüche 1 bis 5, in welchem ein Inertgas in die Tasche (12) eingeführt wird, bevor das Vakuum gebildet wird.

7. Verfahren nach Anspruch 6, in welchem das Inertgas Stickstoff ist.

8. Verfahren nach irgendeinem der Ansprüche 1 bis 7, in welchem die Tasche (12) aus heißversiegeltem Polyäthylen besteht.

9. Verfahren nach irgendeinem der Ansprüche 1 bis 8, wobei der Schritt des Einfügens des vorgehärteten Laufflächenstreifens (2) in die Tasche (12) umfasst:
Abwickeln eines Streifens (16) aus einem röhrenförmigen Verpackungsmaterial, welches luftundurchlässig ist, von einer Spule (17),
Einfügen des vorgehärteten Laufflächenstreifens (2) in den Streifen (16) des röhrenförmigen Verpackungsmaterials,
Versiegeln der Tasche (12) entlang des Streifens (16) aus röhrenförmigem Verpackungsmaterial mittels zwei Querdichtungen auf gegenüberliegenden Seiten des vorgehärteten Laufflächenstreifens (2), und
Ablösen der Tasche (12) von dem Streifen (16) aus Verpackungsmaterial.

10. Verfahren nach irgendeinem der Ansprüche 1 bis 8, wobei der Schritt des Einfügens des vorgehärteten Laufflächenstreifens (2) in die Tasche (12) umfasst:
Abwickeln eines Streifens (16) aus flachem Verpackungsmaterial, welches luftundurchlässig ist, von einer Spule (17),
Positionieren des vorgehärteten Laufflächenstreifens (2) auf dem Streifen (16) aus Verpackungsmaterial,
Falten des Streifens (16) aus Verpackungsmaterial in eine Röhre um den vorgehärteten Laufflächenstreifen (2),
Stabilisieren der röhrenförmigen Form des Streifens (16) aus Verpackungsmaterial mittels einer Längsdichtung,
Abdichten der Tasche (12) entlang des Streifens (16) aus Verpackungsmaterial, welcher in eine Röhre um den vorgehärteten Laufflächenstreifen (2) gefaltet ist, mittels zweier Querdichtungen auf gegenüberliegenden Seiten des vorgehärteten Laufflächenstreifens (2), und
Ablösen der Tasche (12) von dem Streifen (16) aus Verpackungsmaterial.

11. Verfahren nach irgendeinem der Ansprüche 1 bis 10, in welchem der vorgehärtete Laufflächenstreifen (2) sofort gehärtet wird, nachdem der vorgehärtete Laufflächenstreifen (2) von dem kontinuierlichen Laufflächenstreifen (5) abgelöst wurde.

12. System (1) zur Herstellung eines vorgehärteten Laufflächenstreifens (2), wobei das System (1) umfasst:
eine Mischvorrichtung (3) zum Herstellen einer Gummigrünmischung,
eine Extrudiervorrichtung (4) zum Extrudieren der Gummimischung in einen kontinuierlichen Grünlaufflächenstreifen (5),
eine Schneidvorrichtung (6) zum Schneiden eines Grünlaufflächenstreifens (2) von dem kontinuierlichen Grünlaufflächenstreifen (5),
eine Härtvorrichtung (7) zum Härten des Grünlaufflächenstreifens (2), um den vorgehärteten Laufflächenstreifen (2) zu erhalten, und
eine Puffervorrichtung (9) zum Puffern einer unteren Oberfläche (10) des vorgehärteten Laufflächenstreifens (2),
wobei das System (1) **dadurch gekennzeichnet ist, dass** es umfasst:
eine Verpackungsstation (11), die stromabwärts von der Puffervorrichtung (9) angeordnet ist, und wiederum umfasst:
eine Einfügevorrichtung zum Einfügen des vorgehärteten Laufflächenstreifens (2) in eine Tasche (12) aus einem luftundurchlässigen Material, sofort nachdem die untere Oberfläche (10) des vorgehärteten Laufflächenstreifens (2) gepuffert ist,
eine Saugvorrichtung zum Bilden eines Vakuums innerhalb der Tasche (12), die den vorgehärteten Laufflächenstreifen (2) enthält, und
eine Dichtungsvorrichtung zum Abdichten der Tasche (12), die den vorgehärteten Laufflächenstreifen (2) enthält.

13. System (1) nach Anspruch 12, in welchem eine Rollvorrichtung (13) den vorgehärteten Laufflächenstreifen (2) in eine Rolle (14) aufrollt.

14. System (1) nach Anspruch 13, in welchem die Rollvorrichtung (13) stromaufwärts von der Verpackungsstation (11) angeordnet ist.

15. System (1) nach Anspruch 13, in welchem die Rollvorrichtung (13) stromabwärts von der Verpackungsstation (11) angeordnet ist.

16. System (1) nach irgendeinem der Ansprüche 12 bis 15, in welchem stromaufwärts von der Saugvorrichtung eine Zufuhrvorrichtung ein Inertgas in die Tasche (12) zuführt.

17. System (1) nach irgendeinem der Ansprüche 12 bis 16, in welchem stromaufwärts von der Schneidvorrichtung (6) eine Härtvorrichtung (7) den kontinuierlichen Laufflächenstreifen (5) härtet.

18. Ein geformter vorgehärteter Laufflächenstreifen (2) zur kalten Wiederaufbereitung eines LKW-Reifens, in welchem der vorgehärtete Laufflächenstreifen (2) **dadurch gekennzeichnet ist, dass** er kein Bindemittel enthält, und dadurch, dass er in eine vakuumabgedichtete Tasche (12) aus luftundurchlässigem Material eingebettet ist.

## Revendications

1. Procédé de production d'une bande de roulement pré-vulcanisée (2) ; le procédé comprenant les étapes qui consistent :
à former un mélange de caoutchouc vert ;
à extruder le mélange de caoutchouc en une bande de roulement verte continue (5) ;
à détacher une bande de roulement verte (2) de la bande de roulement verte continue (5) ;
à vulcaniser la bande de roulement verte (2) pour obtenir la bande de roulement pré-vulcanisée (2) ; et
à poncer une surface inférieure (10) de la bande de roulement pré-vulcanisée (2) ;
le procédé étant **caractérisé par** le fait de comprendre les étapes supplémentaires qui consistent :
à insérer la bande de roulement pré-vulcanisée (2) dans un sac (12), réalisé en un matériau imperméable à l'air, immédiatement après avoir poncé la surface inférieure (10) de la bande de roulement pré-vulcanisée (2) ;
à former un vide dans le sac (12) contenant la bande de bande de roulement pré-vulcanisée (2) ; et
à sceller le sac (12) contenant la bande de roulement pré-vulcanisée (2).

2. Procédé tel que revendiqué dans la revendication 1, dans lequel la bande de roulement pré-vulcanisée (2) est enroulée en un rouleau (14).

3. Procédé tel que revendiqué dans la revendication 2, dans lequel le rouleau (14) est stabilisé en appliquant une ceinture (15) autour du rouleau (14).

4. Procédé tel que revendiqué dans la revendication 2 ou 3, dans lequel la bande de roulement pré-vulcanisée (2) est enroulée en un rouleau (14) après insertion de la bande de roulement pré-vulcanisée (2) dans le sac (12).

5. Procédé tel que revendiqué dans la revendication 2 ou 3, dans lequel la bande de roulement pré-vulcanisée (2) est enroulée en un rouleau (14) avant que la bande de roulement pré-vulcanisée (2) ne soit insérée dans le sac (12).

6. Procédé tel que revendiqué dans l'une des revendications 1 à 5, dans lequel un gaz inerte est introduit dans le sac (12) avant formation du vide.

7. Procédé tel que revendiqué dans la revendication 6, dans lequel le gaz inerte est l'azote.

8. Procédé tel que revendiqué dans l'une des revendications 1 à 7, dans lequel le sac (12) est réalisé en polyéthylène thermosoudable.

9. Procédé tel que revendiqué dans l'une des revendications 1 à 8, dans lequel l'étape d'insertion de la bande de roulement pré-vulcanisée (2) dans le sac (12) comprend le fait :
de dérouler une bande (16) d'un matériel d'emballage tubulaire, imperméable à l'air, d'une bobine (17) ;
d'insérer la bande de roulement pré-vulcanisée (2) dans la bande (16) de matériau d'emballage tubulaire ;
de sceller le sac (12) le long de la bande (16) de matériau d'emballage tubulaire au moyen de deux joints transversaux sur les côtés opposés de la bande de roulement pré-vulcanisée (2) ; et
de détacher le sac (12) de la bande (16) de matériau d'emballage.

10. Procédé tel que revendiqué dans l'une des revendications 1 à 8, dans lequel l'étape d'insertion de la bande de roulement pré-vulcanisée (2) dans le sac (12) comprend le fait :
de dérouler une bande (16) d'un matériel d'emballage plat, imperméable à l'air, d'une bobine (17) ;
de placer la bande de roulement pré-vulcanisée (2) sur la bande (16) de matériau d'emballage ;
de plier la bande (16) de matériau d'emballage en un tube autour de la bande de roulement pré-vulcanisée (2) ;
de stabiliser la forme tubulaire de la bande (16) de matériau d'emballage au moyen d'un joint longitudinal ;
de sceller le sac (12) le long de la bande (16) de matériau d'emballage, plié en un tube autour de la bande de roulement pré-vulcanisée (2), au moyen de deux joints transversaux sur les côtés opposés de la bande de roulement pré-vulcanisée (2) ; et
de détacher le sac (12) de la bande (16) de matériau d'emballage.

11. Procédé tel que revendiqué dans l'une des revendications 1 à 10, dans lequel la bande de roulement pré-vulcanisée (2) est immédiatement vulcanisée après détachement de la bande de roulement pré-vulcanisée (2) de la bande de roulement continue (5).

12. Système (1) de production d'une bande de roulement pré-vulcanisée (2) ; le système (1) comprenant :
un dispositif de mélange (3) destiné à produire un mélange de caoutchouc vert ;
un dispositif d'extrusion (4) pour extruder le mélange de caoutchouc en une bande de roulement verte continue (5) ;
un dispositif de coupe (6) pour couper une bande de roulement verte (2) de la bande de roulement verte continue (5) ;
un dispositif de vulcanisation (7) pour vulcaniser la bande de roulement verte (2) pour obtenir la bande de roulement pré-vulcanisée (2) ; et
un dispositif de ponçage (9) pour poncer une surface inférieure (10) de la bande de roulement pré-vulcanisée (2) ;
le système (1) étant **caractérisé par** le fait de comprendre une station d'emballage (11) située en aval du dispositif de ponçage (9) et comprenant à son tour :
un dispositif d'insertion pour insérer la bande de roulement pré-vulcanisée (2) dans un sac (12), réalisé en un matériau imperméable à l'air, immédiatement après ponçage de la surface inférieure (10) de la bande de roulement pré-vulcanisée (2) ;
un dispositif d'aspiration pour former un vide dans le sac (12) contenant la bande de roulement pré-vulcanisée (2) ; et
un dispositif de scellement pour sceller le sac (12) contenant la bande de roulement pré-vulcanisée (2).

13. Système (1) tel que revendiqué dans la revendication 12, dans lequel un dispositif de roulement (13) fait rouler la bande de roulement pré-vulcanisée (2) en un rouleau (14).

14. Système (1) tel que revendiqué dans la revendication 13, dans lequel le dispositif de roulement (13) est situé en amont de la station d'emballage (11).

15. Système (1) tel que revendiqué dans la revendication 13, dans lequel le dispositif de roulement (13) est situé en aval de la station d'emballage (11).

16. Système (1) tel que revendiqué dans l'une des revendications 12 à 15, dans lequel, en amont du dispositif d'aspiration, un dispositif d'alimentation alimente un gaz inerte dans le sac (12).

17. Système (1) tel que revendiqué dans l'une des revendications 12 à 16, dans lequel, en amont du dispositif de coupe (6), un dispositif de vulcanisation (7) vulcanise la bande de roulement continue (5).

18. Bande de roulement pré-vulcanisée moulée (2) pour retraiter à froid un pneu de camion ; la bande de roulement pré-vulcanisée (2) est **caractérisée par** l'absence de ciment, et par le fait d'être renfermée dans un sac scellé sous vide (12) d'un matériau imperméable à l'air.
